# EUROPEAN PATENT APPLICATION

(11) **EP 2 442 260 A1**
(43) Date of publication of application: **18.04.2012**
(21) Application number: 10178903.0
(22) Date of filing: 23.09.2010
(51) Int. Cl.: G06Q 10/00

(54) **Meeting room scheduling system including room occupancy sensor and related methods**

(71) Applicant: RESEARCH IN MOTION LIMITED, Waterloo, Ontario N2L 3W8 (CA)
(72) Inventor: Adams, Neil Patrick, Waterloo Ontario N2L 3L3 (CA); Davis, Dinah Lea Marie, Waterloo Ontario N2L 3L3 (CA)
(74) Representative: Roberts, Gwilym Vaughan

(57) **Abstract**

A meeting room scheduling system may include at least one room occupancy sensor configured to be positioned within the meeting room and a controller coupled to the at least one room occupancy sensor. The controller may be configured to schedule periodic meetings for the meeting room with a requested meeting time, and determine actual occupancy times of the meeting room over a plurality of the periodic meetings based upon the at least one room occupancy sensor. The controller may also be configured to reschedule remaining ones of the periodic meetings with a rescheduled meeting time based upon the determined actual occupancy times being different than the requested meeting time.

## Description

### Technical Field

The present disclosure relates to the field of scheduling and, more particularly, to meeting scheduling systems and related methods.

### Background

Meeting rooms are increasingly in demand for a given meeting. A meeting room may be scheduled far in advance of a given meeting, for example. Additionally, a meeting room may be scheduled for many possible times for a given meeting, or may be scheduled for a reoccurring meeting. A meeting room schedule may be revised many times between an initial scheduling and the given meeting. For example, a given meeting in the meeting room may be scheduled, rescheduled, moved, and even cancelled prior to the given meeting. The vacancy of the meeting room may be considered prior to scheduling the given meeting or reoccurring meeting.

### Brief Description of the Drawings

FIG. 1 is a schematic diagram of a system in accordance with an exemple embodiment.

FIG. 2 is a schematic block diagram of the system of FIG. 1.

FIG. 3 is another schematic block diagram of the system of FIG. 1.

FIG. 4 is yet another schematic block diagram of the system of FIG. 1.

FIG. 5 is a flow chart of a method of scheduling a meeting room in accordance with an exemple embodiment.

### Detailed Description of the Preferred Embodiments

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

In accordance with an example aspect, a meeting room scheduling system may include at least one room occupancy sensor configured to be positioned within the meeting room. The meeting room scheduling system may also include a controller coupled to the at least one room occupancy sensor and configured to schedule periodic, or recurring, meetings for the meeting room with a requested meeting time. The controller may also be configured to determine actual occupancy times of the meeting room over a plurality of the periodic meetings based upon the at least one room occupancy sensor, and reschedule remaining ones of the periodic meetings with a rescheduled meeting time based upon the determined actual occupancy times being different than the requested meeting time. Accordingly, the resources for scheduling a meeting room may be reduced, and the meeting room may be scheduled more efficiently.

The controller may be configured to send a notification that the remaining ones of the periodic meetings have been rescheduled with the rescheduled meeting time. The controller may be configured to send the notification as an email notification, for example. The controller may also be configured send a notification that the determined actual occupancy times are different than the requested meeting time.

The controller may be configured to request input from a meeting scheduler. The controller may further be configured to reschedule remaining ones of the periodic meetings with the rescheduled meeting time further based upon input from the meeting scheduler. The controller may be configured to reschedule remaining ones of the periodic meetings with the rescheduled meeting time further based upon deletion of a meeting scheduler from a plurality of meeting schedulers.

The controller may be configured to send a notification to a queued meeting scheduler based upon one of the determined actual occupancy times being different than the requested meeting time. The controller may be configured to reschedule remaining ones of the periodic meetings with the rescheduled meeting time further based upon a threshold number of times the determined actual occupancy times is different than the requested meeting time. The controller may be configured to reschedule remaining ones of the periodic meetings with the rescheduled meeting time having at least one of a rescheduled start time or a rescheduled end time, for example.

The system may further include a database coupled to the controller and configured to store the scheduled periodic meetings for the meeting room. The system may further include a communications network operatively coupling said at least one room occupancy sensor and said controller, for example. The at least one room occupancy sensor may include at least one of a motion sensor, a temperature sensor, or a pressure sensor, for example.

Another aspect is directed to a resource management system that may include at least one sensor configured to be positioned adjacent the resource, for example. The resource management system may also include a controller coupled to the at least one sensor. The controller may be configured to schedule periodic usages of the resource with a requested usage time. The controller may also be configured to determine actual usage times of the resource over a plurality of the periodic uses based upon data from the at least one sensor, for example. The controller may further be configured to reschedule remaining ones of the periodic uses with a rescheduled usage time based upon at least one determined actual usage time being different than the requested usage time.

A method aspect is directed to a method of scheduling a meeting room using a controller coupled to at least one room occupancy sensor of a meeting room. The method may include scheduling periodic meetings for the meeting room with a requested meeting time, and determining actual occupancy times of the meeting room over a plurality of the periodic meetings based upon the at least one room occupancy sensor, for example. The method may further include rescheduling remaining ones of the periodic meetings with a rescheduled meeting time based upon the determined actual occupancy times being different than the requested meeting time.

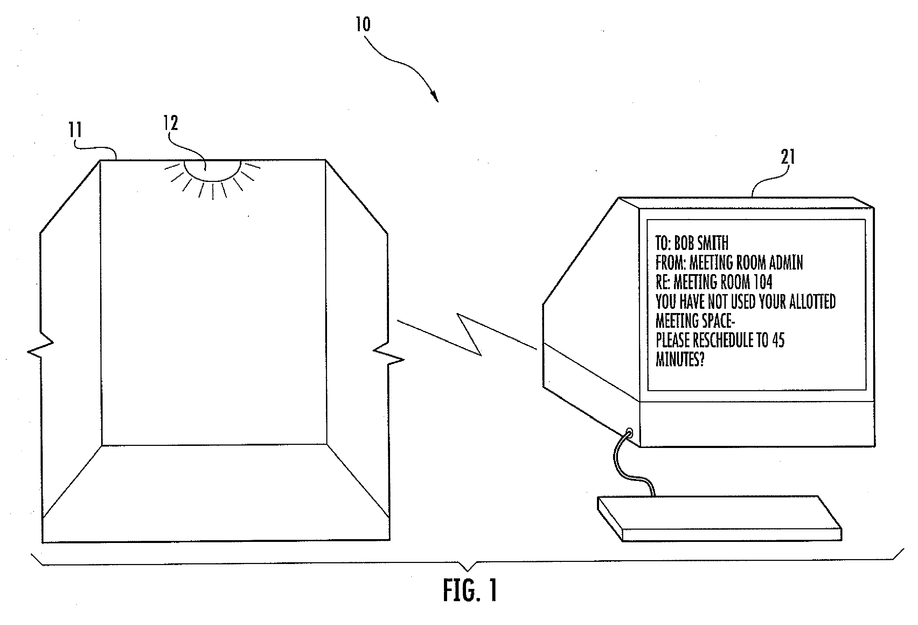

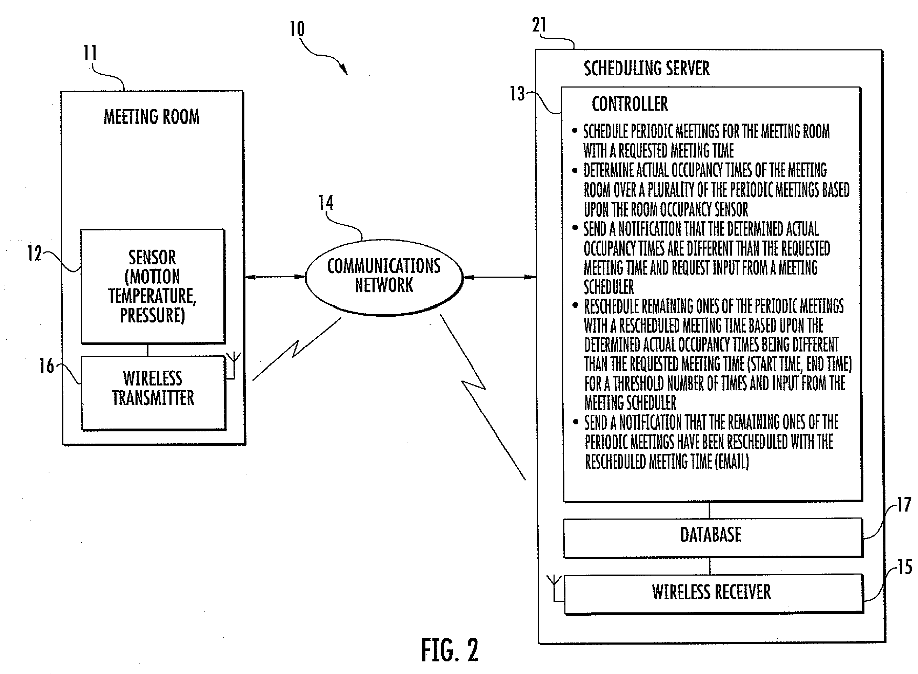

Referring initially to FIGS. 1 and 2, a meeting room scheduling system **10** illustratively includes a meeting room **11** and a room occupancy sensor **12** positioned within the meeting room. The room occupancy sensor **12** illustratively includes a motion sensor (FIG. 1), for example, a passive infrared (PIR) motion sensor, or ultrasonic motion sensor. The room occupancy sensor **12** may be another type of occupancy sensor, for example, a pressure sensor, or a temperature sensor. The meeting room scheduling system **10** may include additional room occupancy sensors, and more than one type of room occupancy sensor may be used.

The meeting room scheduling system **10** illustratively includes a scheduling server **21**, which includes a controller **13** coupled to the room occupancy sensor **12.** The scheduling server **21**, and thus the controller **13** and the room occupancy sensor **12** may be coupled via a communications network **14**. The communications network **14** may comprise the Internet, a cellular network, or a combination of networks, for example, and may include one or both of wired and wireless networks. The scheduling server **21** may include a wireless receiver **15**. A wireless transmitter **16** may be coupled to the room occupancy sensor **12** and may communicate wirelessly over the communications network **14** to communicate with the wireless receiver **15.** Communications between the scheduling server **21**, or the controller **13** and the room occupancy sensor **12** may be wired, for example, over a local area network (LAN), using an 802.11x protocol. Other types of networks and protocols may be used.

The controller **13** is configured to schedule periodic meetings for the meeting room **11** with a requested meeting time. For example, the meeting room **11** may be scheduled for periodic meetings using a meeting room scheduling program on a database **17** that may be included on a computer-readable medium and executed by the controller **13**. Where there is more than one meeting room **11** to be scheduled, each meeting room may have its own schedule stored on a database **17**. The meeting room **11** may be scheduled using an email client program, for example, Microsoft Outlook™. The controller **13** and the database **17** may cooperate with the meeting room scheduling program to indicate whether the requested meeting time is available. For example, the availability of the meeting room **12** may be graphically shown on a display to a meeting scheduler.

The meeting room **11** may be scheduled by including a start time and an end time. The meeting room **11** may also be scheduled by including one of a start time and an end time, and a meeting duration. For example, a meeting room **11** may be scheduled for a weekly meeting each Friday from 1 p.m. to 3 p.m., for a duration of 2 hours. A meeting room may often be scheduled many weeks in advance of the actual meeting because of a limited number of meeting rooms. Moreover, a meeting room may be scheduled more than actually needed because of an uncertainty of scheduling.

The controller **13** is configured to determine actual occupancy times of the meeting room **11** over a plurality of the periodic meetings based upon the room occupancy sensor **12**. The controller **13** may poll the room occupancy sensor **12** for determining the actual room occupancy times. Alternatively or additionally, the room occupancy sensor **12** may push the actual room occupancy times to the controller **13**. For example, the controller **13** may determine if the meeting room **11** has been occupied for less time than scheduled. In other words, the controller **13** may cooperate with the room occupancy sensor **12** to determine if the meeting room **11** was scheduled for a duration of two hours, but was occupied for an hour of that duration. In another example, the controller **13** may cooperate with the room occupancy sensor **12** to determine if the meeting was not attended by anyone, for example, if the room occupancy sensor does not detect occupancy within the scheduled meeting time.

The controller **13** advantageously determines the actual occupancy over a threshold number of the periodic meetings and compares the actual occupancy to the scheduled periodic meetings. If it is determined that, for over the threshold number of periodic meetings, the actual occupancy times were different than the requested or scheduled meeting time, the controller **13** is configured to reschedule remaining ones of the periodic meetings with a rescheduled meeting time.

For example, if the controller **13** determines that the meeting room **11** was scheduled or requested for each Friday for six months, but was not actually occupied for N meetings, the controller may reschedule remaining ones of the periodic meetings with a rescheduled meeting time. Alternatively, or additionally, in the example of a meeting scheduled for two hours, if the controller **13** determines that for N meetings, the meeting room **11** was actually occupied for one hour of the two-hour duration, the controller may reschedule remaining ones of the periodic meetings with a rescheduled meeting time.

N may be set to any number. Additionally, the controller **13** may make a determination if the threshold has been exceeded based upon N consecutive meetings where the actual occupancy times were different than the requested or scheduled meeting time. The controller **13** may make other types of determinations based upon the actual occupancy times being different than the requested meeting time. The controller **13** notification may also send a notification, for example, an email notification that the remaining ones of the periodic meetings have been changed.

Additionally, if the controller **13** determines actual occupancy times were different than the requested meeting time for over the threshold number of occurrences, the controller may send a notification. The notification may be an email notification, for example, and may be sent to the meeting scheduler or person responsible for scheduling the periodic meetings. The notification may be another type of notification, for example, an instant message. The email notification may include a prompt for a response from the meeting scheduler to accept or decline the rescheduled meeting time proposed by the controller **13.** The email notification may include a hyperlink, for example, to the meeting room entry in the database **17**, or within the scheduling program. In other words, the controller **13** may prompt the meeting scheduler as to whether the meeting room is still needed for the scheduled meetings, or still needs the meetings to be scheduled for, in the example above, the entire two hours. The email notification may include a rescheduled start time, end time, duration, or combination thereof.

If the controller **13** does not receive a response from the meeting scheduler within a predetermined amount of time, for example, a threshold number of days, the controller **13**, may reschedule the remaining ones of the periodic meetings as it had suggested. Alternatively, the controller **13** may cancel remaining ones of the periodic meetings. The controller **13** may perform other rescheduling actions.

The meeting room scheduling system **10** advantageously may improve productivity by reducing an amount of time spent on scheduling a meeting room. More particularly, the meeting room scheduling system **10** may reduce the amount time a meeting scheduler may look for an available meeting room, and reduce an amount of email to others requesting a meeting room. Travel time to a meeting room, for example, a meeting room in a different building, may also be reduced. Also, an amount of cancelled meetings due to a lack of meeting rooms may also be reduced. Moreover, utilization of the meeting room may be increased. Thus, the meeting room system **10** may reduce costs associated with scheduling meeting rooms and improve productivity.

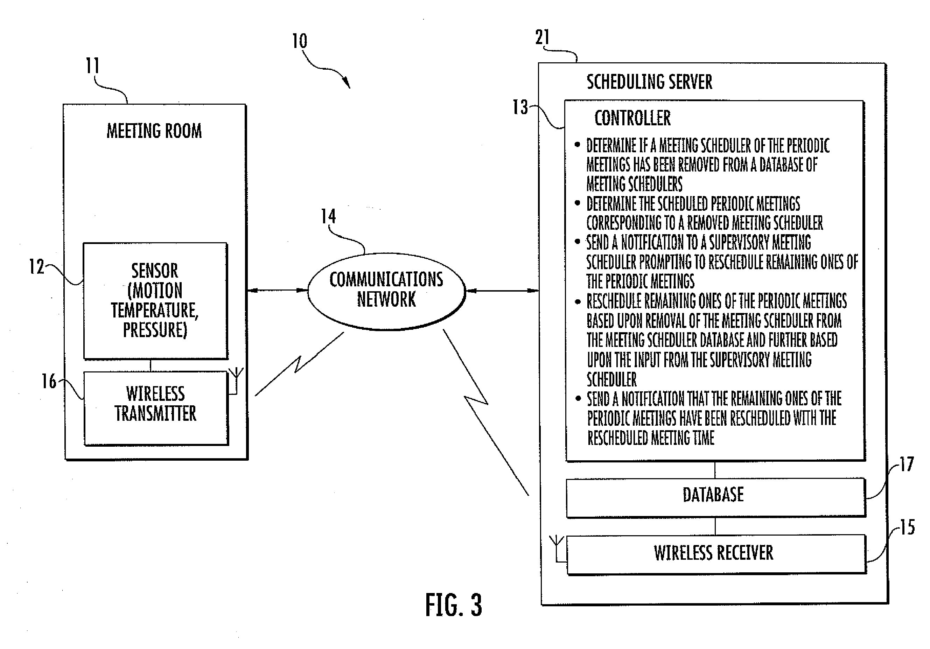

Referring now to FIG. 3, the controller **13** may be configured to determine if a meeting scheduler (i.e. a meeting organizer) of the periodic meetings has been removed from a listing of meeting schedulers. The listing of meeting schedulers may be stored in the database **17**, or another database, for example. For example, the controller **13** may be configured to determine if a meeting scheduler has been removed from an address book, for example, a global address book listing in the database **17**. A meeting scheduler being removed from the database of meeting schedulers may be indicative that the meeting scheduler is no longer in need of the meeting room **11**, for example, if the meeting scheduler is no longer associated with a company.

The controller **13** is configured to determine the scheduled periodic meetings corresponding to a removed meeting scheduler. The controller **13** advantageously reschedules remaining ones of the periodic meetings based upon removal of the meeting scheduler from the database **17**.

The controller **13** may also be configured to send a notification, for example, an email notification, to a supervisory meeting scheduler that the remaining ones of the periodic meetings have been rescheduled with the rescheduled meeting time, or cancelled. Additionally, a notification may be sent and may include a prompt to the supervisory meeting scheduler to reschedule remaining ones of the periodic meetings, or more particularly, prompt whether the remaining ones of the scheduled periodic meetings for the meeting room should be cancelled. This advantageously may increase availability to a given meeting room.

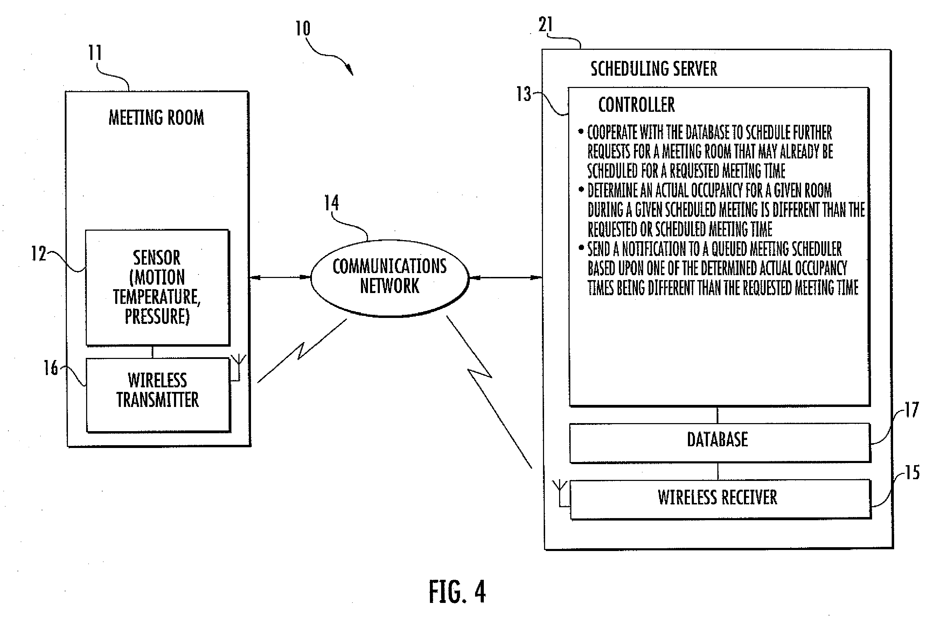

Referring now additionally to FIG. 4, the controller **13** may be configured to cooperate with the database **17** to schedule further requests for a meeting room **11** that may already be scheduled for a requested meeting time. In other words, the controller **13** may cooperate with the database **17** to add a meeting scheduler, or meeting organizer, to a "wait list" for a given meeting room **11** at the requested meeting time. When being added to the "wait list," the meeting scheduler may request that the given meeting room **11** meet certain criteria, for example, be a certain size and have certain equipment capabilities, for example, a telephone, a computer, a projector, and video conferencing capabilities. The wait list may include a requested duration for the meeting room **11**. The meeting may be not be a periodic meeting, but may be a one-time meeting, for example.

Upon determining an actual occupancy for a given room during a given scheduled meeting is different, for example, shorter than the requested or scheduled meeting time, the controller **13** may send a notification, for example, an email notification, to the first meeting scheduler in the "wait list," whose request corresponds to the meeting room and requested duration. For example, if a meeting room becomes empty forty-five minutes early, the controller **13** advantageously traverses the "wait list" for a first meeting scheduler whose request fits within the remaining time, for example, a half-hour. The controller **13** sends a meeting room availability notification to the meeting scheduler.

The notification may include information about the meeting room's availability, for example, a real-time notification of the actual occupancy and the next scheduled meeting time. The notification may also include information about the size of the meeting room **11** and the room's equipment capabilities, for example. The notification may include other information about the meeting room **11**, for example, its respective meeting scheduler. The notification may also include a prompt, or link, to accept or decline use of the meeting room **11**. In some instances, the use of the meeting room may be declined. If use of the meeting rooms is declined, the controller **13** advantageously may send a request to the next meeting scheduler in the wait list whose request for the meeting room **11** fits within the remaining time. The controller **13** may send a notification to a meeting scheduler on the wait list based upon a cancellation. This advantageously increases the actual occupancy of the meeting room, and reduces a backlog of meeting room requests.

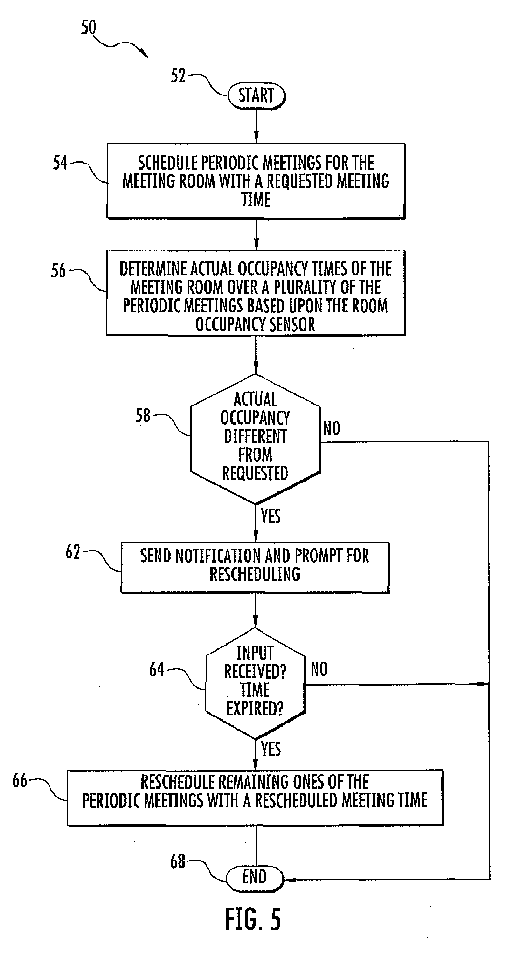

Referring now to the flowchart **50** in FIG. 5, beginning at Block **52**, a method of scheduling a meeting room **11** using a controller **13** coupled to a room occupancy sensor **12** of a meeting room includes, at Block **54** scheduling periodic meetings for the meeting room with a requested meeting time.

At Block **56**, the method includes determining actual occupancy times of the meeting room over a plurality of periodic meetings scheduled for the meeting room with a requested meeting time. The determination of actual occupancy times is based upon data from a room occupancy sensor **12** positioned within the meeting room **11**. If the determined actual occupancy times are different than the requested meeting time (Block **58**), the controller **13** sends a notification and prompts for rescheduling remaining ones of the periodic meetings with a rescheduled meeting time (Block **62**). If the controller **13** does not receive a response to the notification after a threshold amount of time, or if a response is received to reschedule the remaining ones of the periodic meetings with the rescheduled meeting time (Block **64**), the controller reschedules remaining ones of the periodic meetings with a rescheduled meeting time (Block **66**). The method ends at Block **68**.

Many modifications and other example embodiments of the present disclose will come to the mind of one skilled in the art having the benefit of the teachings presented in the foregoing descriptions and the associated drawings. Therefore, it is understood that the present disclosure is not to be limited to the specific example embodiments disclosed, and that modifications and example embodiments are intended to be included within the scope of the appended claims.

## Claims

1. A meeting room scheduling system comprising:
at least one room occupancy sensor configured to be positioned within the meeting room; and
a controller coupled to said at least one room occupancy sensor and configured to
schedule periodic meetings for the meeting room with a requested meeting time,
determine actual occupancy times of the meeting room over a plurality of the periodic meetings based upon data from said at least one room occupancy sensor, and
reschedule remaining ones of the periodic meetings with a rescheduled meeting time based upon the determined actual occupancy times being different than the requested meeting time.

2. The system according to Claim 1, wherein said controller is configured to send a notification that the remaining ones of the periodic meetings have been rescheduled with the rescheduled meeting time.

3. The system according to Claim 2, wherein the notification comprises as an email notification.

4. The system according to Claim 1, wherein said controller is configured to send a notification that the determined actual occupancy times are different than the requested meeting time.

5. The system according to Claim 1, wherein said controller is configured to request input from a meeting scheduler.

6. The system according to Claim 5, wherein said controller is configured to reschedule remaining ones of the periodic meetings with the rescheduled meeting time further based upon input from the meeting scheduler.

7. The system according to Claim 1, wherein said controller is configured to reschedule remaining ones of the periodic meetings with the rescheduled meeting time further based upon deletion of a meeting scheduler from a plurality of meeting schedulers.

8. The system according to Claim 1, wherein said controller is configured to send a notification to a queued meeting scheduler based upon one of the determined actual occupancy times being different than the requested meeting time.

9. The system according to Claim 1, wherein said controller is configured to reschedule remaining ones of the periodic meetings with the rescheduled meeting time further based upon a threshold number of times that the determined actual occupancy times is different than the requested meeting time.

10. The system according to Claim 1, wherein said controller is configured to reschedule remaining ones of the periodic meetings with the rescheduled meeting time having at least one of a rescheduled start time or a rescheduled end time.

11. A meeting room scheduling method using a controller coupled to at least one room occupancy sensor of a meeting room, the method comprising:
scheduling periodic meetings for the meeting room with a requested meeting time;
determining actual occupancy times of the meeting room over a plurality of the periodic meetings based upon data from the at least one room occupancy sensor; and
rescheduling remaining ones of the periodic meetings with a rescheduled meeting time based upon the determined actual occupancy times being different than the requested meeting time.

12. The method according to Claim 11, further comprising sending a notification upon the determined actual occupancy times being different than the requested meeting time.

13. The method according to Claim 11, wherein the notification is sent as an email notification.

14. The method according to Claim 11, further comprising prompting for a response to reschedule the remaining ones of the periodic meetings based upon the determined actual occupancy times being different than the requested meeting time and wherein the rescheduling the remaining ones is based upon the response.

15. The method according to Claim 11, further comprising sending a notification that the determined actual occupancy times are different than the requested meeting time.
